# EUROPEAN PATENT SPECIFICATION

(11) **EP 1 009 511 B1**
(45) Date of publication and mention of the grant of the patent: **25.04.2007**
(21) Application number: 98937354.3
(22) Date of filing: 06.08.1998
(51) Int. Cl.: B01D 33/04, B01D 33/056, B01D 33/64

(54) **FOLDING BELT FILTER**
FALTBARER BANDFILTER
SYSTEME DE FILTRE BANDE PLIABLE

(30) Priority: 06.08.1997 AU PO841997
(43) Date of publication of application: 21.06.2000
(73) Proprietor: Day, Paul Hedley, Myrtle Bank, S.A. 5064 (AU)
(72) Inventor: Day, Paul Hedley, Myrtle Bank, S.A. 5064 (AU)
(74) Representative: W.P. Thompson & Co.
(86) International application number: PCT/AU1998/000619
(87) International publication number: WO 1999/007457

(56) References cited:
- DE-A- 2 950 497
- GB-A- 2 117 659
- PATENT ABSTRACTS OF JAPAN & JP 08 281 022 A (KANETO SHOZI KK) 29 October 1996

## Description

The present invention relates to a belt filter system for separation of material into liquid and solid components, a belt adapted for this purpose and a method for effecting some separation of solid and liquid components, and a method to assisting drying of sludge or slurry like materials.

### BACKGROUND ART

Many industrial and commercial processes require the separation of a sludge or slurry into its component liquid and solid. This may be used to treat a sludge or slurry so as to remove a percentage of its liquid, or to produce a liquid with less solid particulate, or both. Some examples of such sludge or slurry to be so treated include sewage, industrial waste, paper pulp or mixtures, whether they be biological, chemical or mineral-based products.

A belt filter system is known which uses two endless belts where one is located fully above the other and each belt is driven so that they will jointly come together downstream from a loading station whereby to capture and compress to remove further liquid from any retained solids.

To assist in liquid draining from the sludge the belts are manufactured from permeable or porous or woven materials and made from materials such as polyester or polypropylene cloth. The belts may also pass around a number of rollers, in a serpentine manner so as to apply increasing pressure to the sludge trapped between the belts.

The two belts are subsequently separated so that remaining compressed solids either falls or is scraped from one or both of the belts. The lower belt is subsequently passed under the device to return to the sludge feed point, whilst the upper belt passes over the device. Liquid sprays are installed on the return section to clean the belts so they do not become blocked with sludge or solids.

One problem with existing belt filters is that when a liquid sludge of low viscosity is fed onto the lower belt which provides an uppermost receiving surface which is substantially horizontal, the sludge may overflow an edge of the belt.

To overcome this problem, some belt filters are provided with pre-dewatering systems, such as de-watering drums, which remove some of the liquid from the sludge or slurry so as to raise its viscosity before placement on the lower belt. Obviously this all adds to the complexity and therefore cost of the process, as well as the overall cost of such belt filters.

Reference is also made to GB-A-2 117 659, in which sludge to be filtered is fed onto a moving endless filter cloth by two feeders, and is removed by two scrapers located after the feeders. The feeders are positioned so that the sludge is fed onto opposite sides of the cloth, so that the liquid passing through the cloth removes the solid matter that the preceding scraper failed to remove. The sludge can be compressed by means of moving compressing belts or rollers which force the cloth into a tubular form between feeders and scrapers.

DE-A-29 50 497 discloses a process and apparatus for the continuous separation of liquids from solid or colloidal materials, particularly of milk from cheese, by compression. The cheese in the form of a heaped layer on a permeable belt is subjected to pressure loading by opposing surfaces during forward motion, whereby during its forward motion the heaped layer of cheese is transformed into a slab of cheese standing on edge, compression being exerted on both lateral surfaces of the slab. After the compressive treatment the slab is again transformed into a freely spread out layer.

In US-A-5 520 824 the solid content and liquid content in a solid-liquid substance are separated continuously at a high solid-liquid separation ratio by causing a looped filter cloth member to travel, the filter cloth member being wound at least once around a wringing roller, and having a twisted portion at which the filter cloth member is twisted at least once and wound around the wringing roller. A primary rotary motion of the wringing roller is induced in a direction in which the filter cloth member travels and a secondary rotary motion of the wringing roller is induced in a direction in which the filter cloth member is twisted upstream with respect to the wringing roller. A solid-liquid substance is supplied to an upstream portion of the filter cloth member with respect to the wringing roller.

### DISCLOSURE OF THE INVENTION

In accordance with the invention there is provided a porous belt filter device for effecting separation of liquid from solids or solids from liquid, including a frame supporting a porous belt held by and between rollers with drive means so as to progress the belt through a collection zone to a compression zone, characterised in that the one belt is supported so as to be caused to change its shape as it progresses through the collection zone from an approximately planar shape which is supported so as to provide a substantially horizontal alignment of its uppermost surface when viewed in a lateral direction to one where the belt is folded into a supporting shape to have the previously upper surface on one side of the belt being pushed together with the previously upper surface on an opposite side of the belt so that the respective upper surfaces of the sides are aligned to be approximately vertical at a nipping alignment, the nipping alignment being effected by having the folded belt caused to proceed through a curved path around a plurality of substantially vertical rollers and where the uppermost edges of the respective sides of the belt at the nipping location are at a height that is similar or lower height than the upper surface at a commencement location of the collection zone.

In preference the belt is a single endless belt which is caused subsequent to the nipping location to follow a curved path where the plurality of substantially vertical rollers are arranged so that the folded belt will pass around each substantially vertical roller and such that there will be effected a change of direction of the pathway of the belt in its folded orientation thereby.

In preference the system is such that the belt is folded on itself to provide a pressure deliquifying or nipping compression zone through which captured solids from a loaded slurry are progressively compressed so as to cause the solids to be increasingly deliquified.

In preference the belt in its unfolded state is supported to be aligned, in a lateral direction, substantially horizontally, and aligned in a substantially upright orientation when folded upon itself.

This allows the belt to form and be positioned to form a collection or supporting shape to hold liquid slurry which has a liquid component. In use the orientation is such that the belt upper surface will progress substantially downwardly into a compression zone so that liquid slurry is likely to be retained within the upwardly open cavity shape that is then provided. If the slurry or other material to be separated is then poured into this shape, the amount of liquid that can be held without this overflowing is defined by the size of the cavity and this can then be designed to be substantial.

Further, the slurry level can be kept high within the cavity so that the full width of the compressing surfaces can be used for compression. Further, the level of slurry within the cavity can be easily monitored so that there can be an automatic feed of slurry into the cavity in response to changes in the level of slurry detected. However in another case the level is established and maintained by simply limiting the amount of the material being fed into the supporting shape.

In preference, the belt filter further includes guides supporting the belt when progressing from the unfolded to the folded position.

This assists to ensure that the belt or belts where there are more than one does or do not greatly deform out of shape under any weight of slurry, as well as to assist in the tracking of the belt or belts.

In preference, the belt filter further includes guides adapted to support the belt when changing from the folded state into the unfolded state.

In preference, the belt is constructed at least in part of a porous, open woven, or permeable material or are arranged to support a filter medium to provide a screening of the liquid in accord with selected criteria. This allows liquid to drain through or past the belt or belts and be removed from the slurry to be deliquified.

In preference, the belt is formed and of a material so as to allow for repeated folding lengthwise along a central fold alignment. In this way, belt wear and tear can be reduced. Such a form and material can be such as to have the medial part somewhat more pliable than a remainder of the belt.

In preference, said belt filter further includes a scraper adapted to scrape the deliquified slurry from said belt.

In preference when the belt is folded upon itself it passes around a plurality of rollers so arranged to result in the belt progressively passing around smaller and smaller diameters of roller.

In preference, the folded belt may first pass through a set of pinch rollers adapted to cause a compression of said slurry. This allows slurry such as a mixture of sand and water to be deliquified.

In preference one or more of said rollers are constructed of a variable diameter along their longitudinal axis so as to ensure that the belt is guided around said rollers.

Furthermore, the rollers may preferentially be of a slotted or perforates type allowing for exudate to also pass through the side of a folded belt against the roller when being nipped. This construction also can assist in self-cleaning of the rollers.

In preference said rollers are slidably adjustable so as to enable said belt to be adjusted in its tensioning around said belt filter. This may also assist in the tracking of the belt.

Preferentially the belt filter includes cleaning means including in one case a washing spray so arranged to direct a stream of water onto said belt to effect a cleaning. In another case, there is an air spray used and in another case there is a combination of air and water used. In a further case there is provided a vibrator which can also be used in combination with the other forms of cleaning.

The porous belt may comprise a middle portion which extends lengthwise along the belt which middle portion is more pliable or flexible than a remained of the belt to facilitate a folding of the belt about this portion, such that the width wise opposite edges of the belt are folded and brought together so that the respective upper surfaces of the sides are aligned to be approximately vertical at a nipping alignment, the nipping alignment being effected by having the folded belt caused to proceed through a curved path around a substantially vertical roller and where the uppermost edges of the respective sides of the belt at the nipping location are at a height that is similar or lower height than the upper surface at a commencement location of the collection zone, the belt being a simple endless belt with no supporting belt.

In preference, said belt filter includes additional support means such as internal wires embedded around the edges of said belt to provide support for the belt and any additional weight that it carries.

The porous belt, may have a middle portion that comprises hinge means to cooperate with the respective surfaces of each respective side of the belt for bunging the respective surfaces together to effect a nipping pressure one against the other to thereby apply pressure to material as it is progressively caught therebetween.

### DESCRIPTION OF EMBODIMENTS

To better understand the invention it will now be described with reference to preferred embodiments which will be described with the assistance of drawings wherein:
FIG. 1 is a perspective view of a first embodiment of the invention;

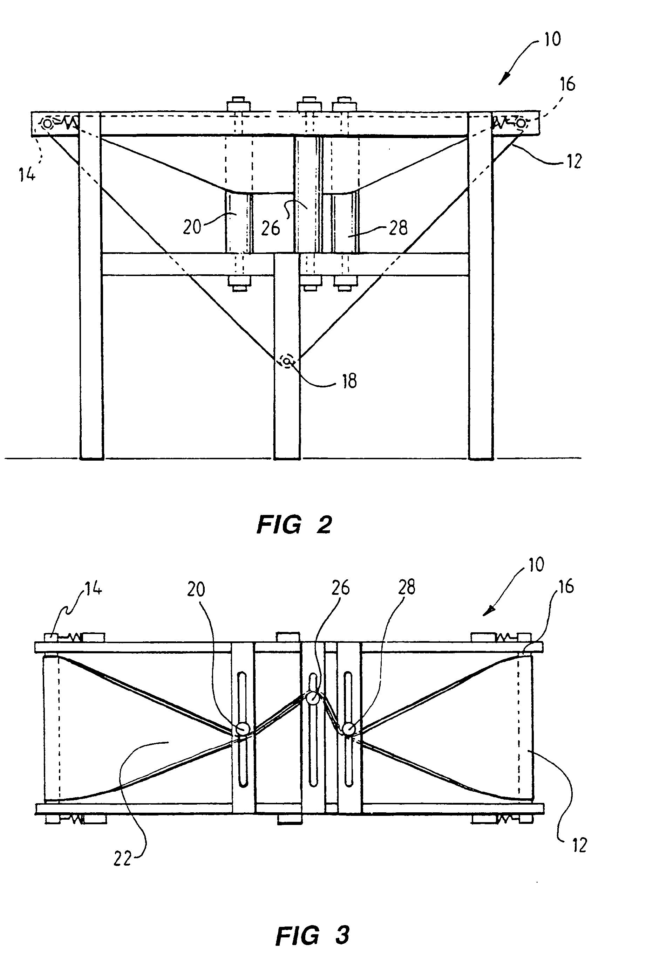

FIG. 2 is a side cross sectional view of the first embodiment as shown in FIG. 1;
FIG. 3 is a top view of the first embodiment as shown in FIG. 1;
FIG 4 is an exploded perspective view of the first embodiment as shown in FIG 1;
FIG 5 is a partial perspective view showing the folding of the belt;
FIG 6 is a partial perspective view showing the reinforcing of the belt;
FIG 7 is a second embodiment of the invention;
FIG 8 is a partial perspective view of a third embodiment of a belt;
FIG 9 is a perspective view of a fourth embodiment without collection trays;
FIG 10 is a side elevation of the fourth embodiment as shown in FIG 9 with the addition of collection trays and the belt being shown in outline,
FIG 11 is a plan view of the fourth embodiment, with the belt and some rollers being shown in dotted outline;
FIG 12 is a perspective view of only the belt and rollers of the fourth embodiment; and
FIG 13 is a schematic drawing illustrating a deflection test arrangement to establish comparative deflectivity of sides of a belt as compared to a middle portion of the belt.

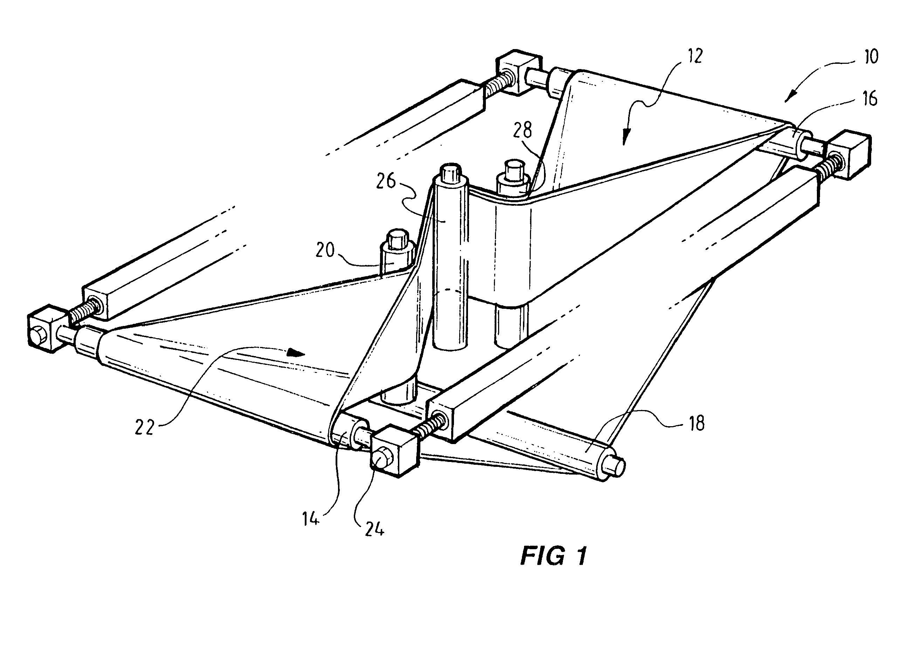

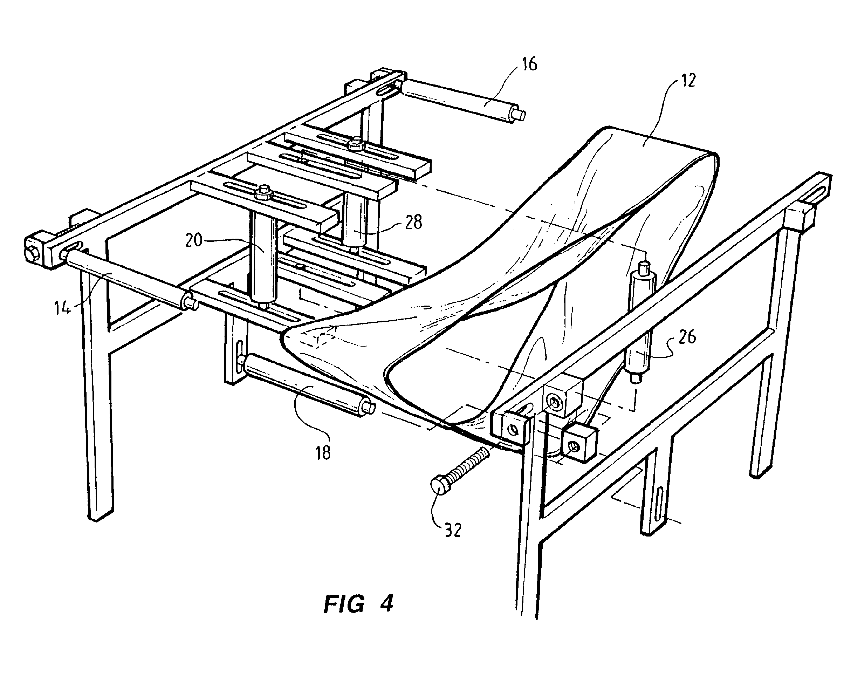

Referring to the first embodiment as shown Figures 1 through to Figure 4 a belt filter 10 has a continuous endless filter belt 12 which is supported and arranged to be driven around rollers 14, 16 and 18 by one of the rollers. The belt 12 is positioned to extend substantially horizontally around rollers 14, 16 and below roller 18. The belt 12 is further supported so as to fold upon itself about a middle part of the belt 12 as it proceeds to roller 20.

In this way, the belt 12 defines between the respective rollers 14 and 20 a supporting cavity or area 22 within which can be placed a liquid sludge or slurry to thereby define a working volume.

Accordingly, between rollers 14 and 20 the belt 12 changes from a substantially horizontal orientation to an orientation that is substantially upright with the edges of the belt being at approximately the same height but with the middle of the belt being lowered to therefore provide that the cavity 22 is an upwardly open shape with a vertical compression zone forming a part of the wall defining the cavity shape.

The belt 12 is driven by the drive means to move around roller 14. Material to be filtered and deliquified is fed into the cavity 22. Slurry that behaves like low viscosity fluid flows to fill the cavity and is initially constrained within it by the shape formed by the belt 12. The belt 12 is made from a suitably permeable material that allows some of the liquid to flow through it but also to build up a filtering effect from retained solids.

Thereby, the cavity 22 becomes the first deliquifying zone where some of the liquid drains through the filter belt by gravity to be collected by a suitable means such as a tray (not shown) under cavity 22. The height of liquid in the cavity 22 can be measured and maintained by level measuring means such as a float controlled valve which is used to control an extent of further introduction of slurry into the cavity 22. Further, because the cavity can be kept substantially full, the amount of liquid being drained can be automatically kept to a maximum and further therefor, the amount of slurry or at least solids from the slurry being engaged between engaging nipping surfaces of the belt can also be kept to a maximum level.

The convergence of the sides of the belt in cavity 22 causes the material wedged between the belt sides to be compressed on its approach to roller 20 which assists to deliquify the material. Further deliquifying is effected as the belt 12 is caused to pass around roller 20 and further around rollers 26 and 28. The material that is captured within the folded belt experiences compression and shear that causes more liquid to pass through the belt to be collected by a suitable means such as a tray (not shown) beneath these rollers.

The two sides of the belt are then unfolded to change from being in a substantially upright position to being substantially horizontal. The deliquified solids materials are then carried over roller 16 and fall or are scraped by a scraper (not shown) from the belt.

One of the problems with an arrangement using a single belt is that the distance between respective parts of the belt from where it passes over a first horizontal and straight roller to where the belt is folded upon itself is not the same. This has meant that in practice there can be some curvature associated with folding a belt between the respective locations. Fortunately when a curvature occurs the curvatures that result assist the process of capture of solids into the nip.

In particular, there are advantages where there are a bulging of facing surfaces between the edges and the folded middle at the first nipping location. This allows for a more complex shape to develop which is tighter at both an upper and lower end than in the middle but this is found to allow for more solid material to enter the nipping area and to be held against side protrusion.

Other embodiments may equally well be used to improve the efficiency of the invention.

Figure 4 shows simple slides for adjustment of the position and angle of rollers 14,16, 18, 20, 26 and 28. This offers a method to adjust the tension on the belt and to adjust the tracking of the belt so it maintains a selected path around the rollers 14,16, 18, 20, 26 and 28. A screw 32 allows more precise adjustment of the tension and tracking of the belt.

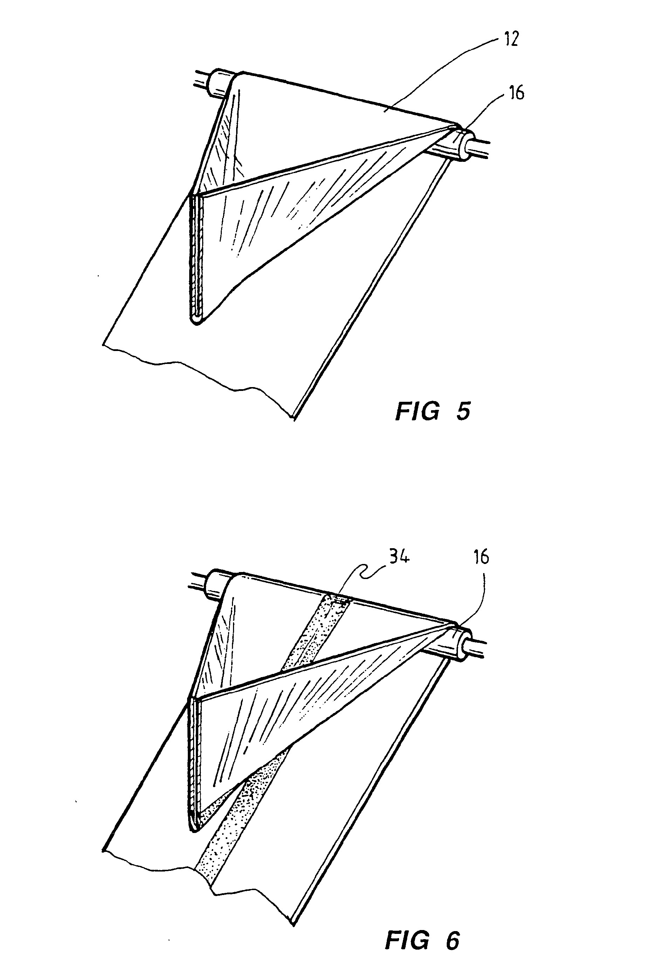

Figures 5 and 6 show a belt that may be used in this invention. Figure 5 shows the belt when it is in a folded upright position. Figure 6 shows an embodiment of the apparatus whereby the belt is suitably reinforced in the center or the center flexing section is replaced by a more suitable flexible material, such as plastic or rubber, with the final choice of material dependent on application. Reinforcing may also equally well be applied to the sides or edges of the belt (not shown).

The compressive and shear forces on the material within the belt affect the efficiency with which material is deliquified. These forces depend upon many factors predominantly belt tension but also the diameter of the vertical rollers, and their relative positions have influence. The number of vertical rollers also has a bearing on the efficiency of the deliquifying.

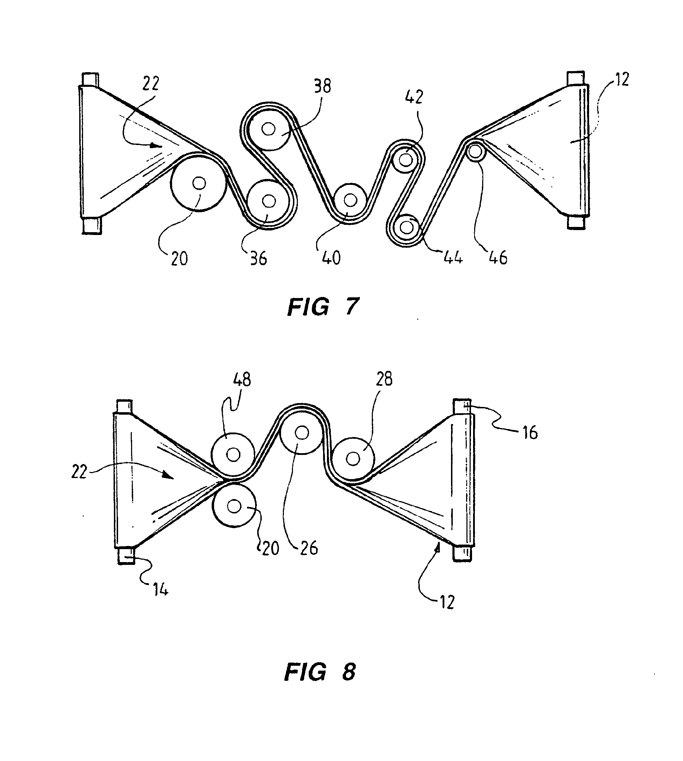

Figure 7 shows an embodiment of the apparatus whereby vertical rollers of different diameters are used, and they are placed in various relative positions. Feed material is transferred into cavity 22 where it is deliquified by gravity and compressed as the belt folds on itself and moves towards roller 20. In some applications roller 20 may be the only roller necessary (such as the deliquifying of sand). However, most applications will require more than the one roller to achieve the desired efficiency. Figure 7 thus shows an embodiment of a folding belt filter employing some 7 vertical rollers. It is to be understood that this invention though is not limited to any particular number of vertical rollers or their relative size and spacing.

Figure 8 shows a further embodiment of the invention whereby roller 48 assists the vertical distribution of material within the belt. Heavier solids in the material to be deliquified at times may settle to the bottom of the cavity 22. This can place an unnecessary strain near the fold of the belt as it moves around the vertical rollers and the heavy material tends to bulge the belt where it accumulates near the fold. Roller 48 acts in combination with roller 20 to form a pair of pinch rollers that smooth the profile of the material constrained within the folded belt thereby reducing the strain on sections of the belt, improving the tracking of the belt and raising deliquifying efficiency of some materials.

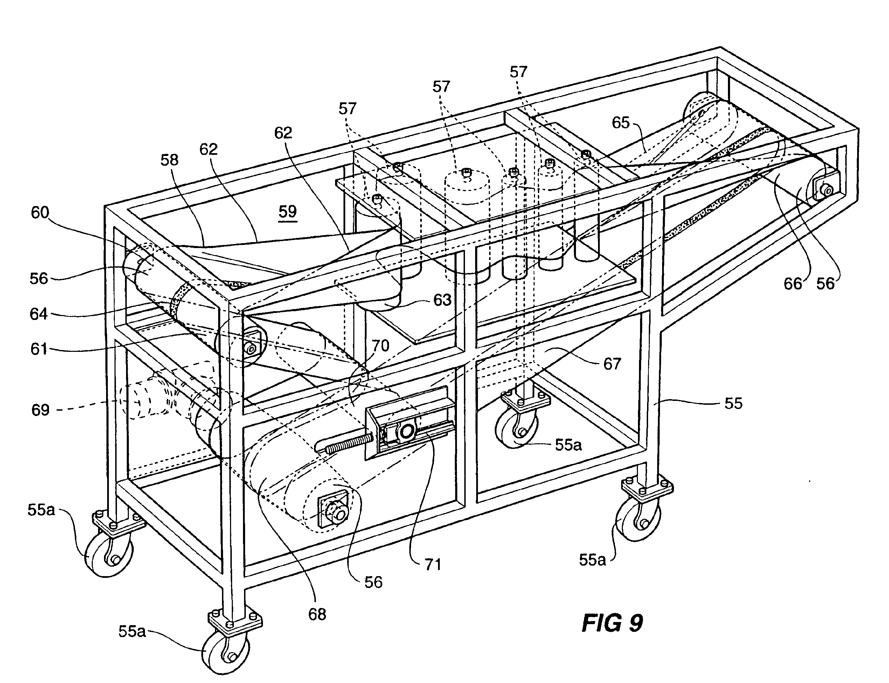

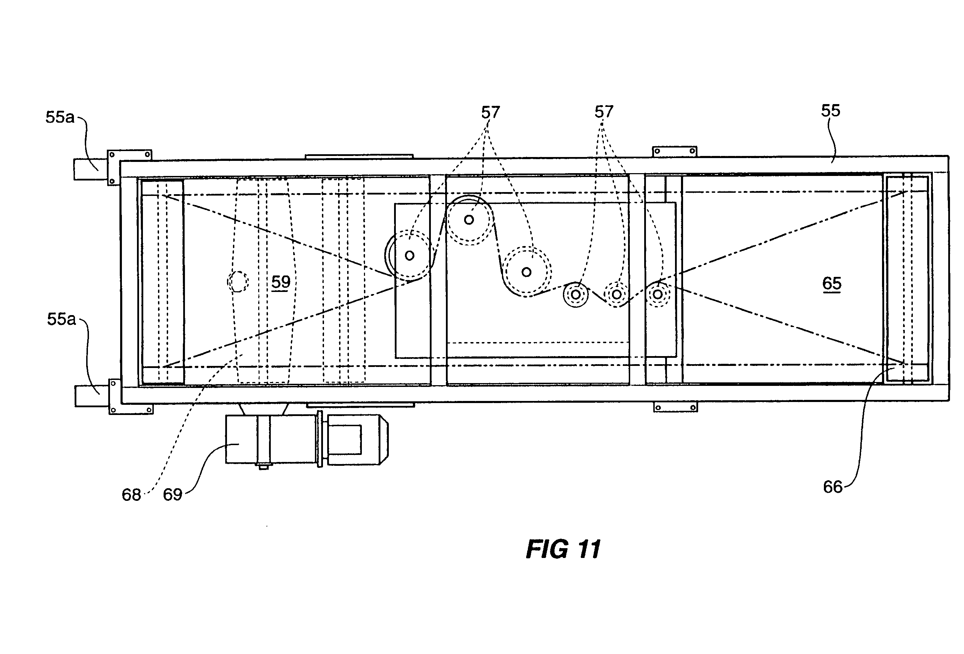

Now referring to Figures 9 through 12 there is shown a more developed machine than in the previous first embodiment and accordingly there is shown a frame 55 with ground engaging supporting wheels 55a which supports a plurality of rollers 56 and 57 which control the passage of belt 58 through respective zones. A first zone 59 is a collection zone where the belt 58 is caused to change its shape from a planar belt to a belt that is folded together to have previously uppermost surfaces of sides 60 and 61 engage substantially against each other to effect a nipping compression effect thereby. This zone 59 has therefore the endless belt 58 shaped so as to provide an uppermost open cavity into which liquids (containing solids to be separated) can be poured.

With a shape such as this with a level of the surfaces of the belt 58 at an introduction to the zone 59 being substantially maintained by edges 62 of the belt up to the nipping zone 63 the level of liquid which will contain the solids to be separated can be kept high and therefore increase efficiency of any separation effect.

The belt 58 has two sides 60 and 61 separated by a middle portion 64 which is more pliable than the sides 60 and 61 so that the belt 58 will easily and without damage fold about this middle portion as it is driven into the nipping zone 63.

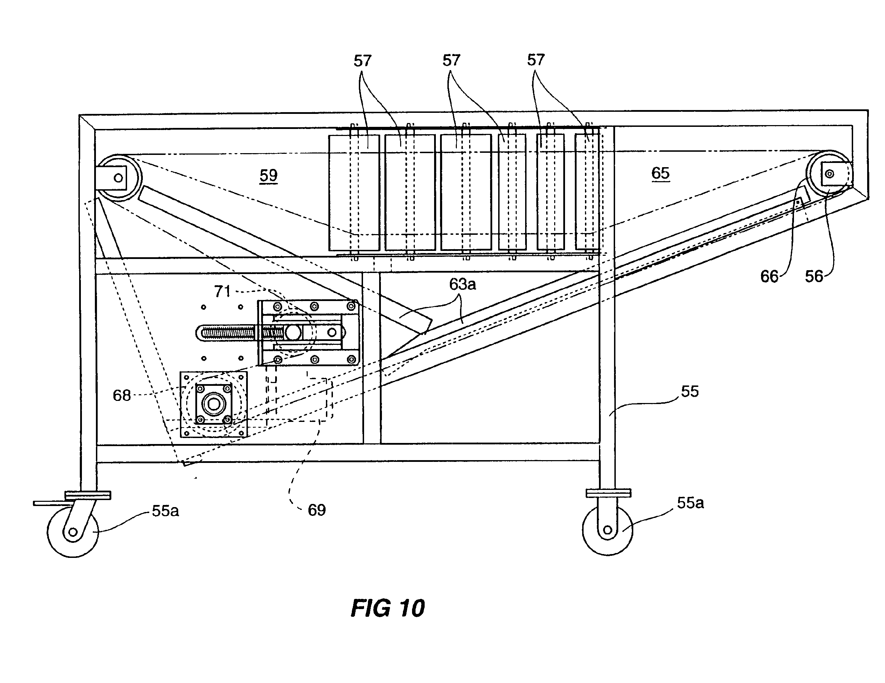

The nipping zone 63 includes a plurality of rollers 57 which are approximately vertically aligned or at least they have their axes at 90 degrees to that of the other rollers. Beneath the respective zones are collection trays shown as 63a especially in Figure 10.

Subsequent to the nipping zone 63 the belt 58 is then unfolded at the unfolding zone 65 where solids that have been subjected to compressing forces are now relieved of these. The result is that the belt 58 will now carry compressed solids on either one or both sides which will then carry over to the end most lateral roller of the group at 66. It is here that a scraper is most conveniently located to remove the compressed solids.

The belt 58 then continues through a cleaning zone 67 where a water spray (a combination of air and water can be also used) which is not specifically shown will be positioned to force water back through the weave of the belt 58 to clean this of retained finer particles. The belt 58 then passes around drive roller 68 with drive motor 69 and tightener roller 70. This roller 70 is adjustable through adjuster 71.

The roller 68 has a camber to assist in keeping the belt 58 in line through its path. Selection of appropriate types of belt which are generally known and referred to as filter belts will also assist as will the selection of an appropriate pliable middle portion. Such selection goes also to selection of joining arrangements so that a join can be sealed off to ensure that liquid does not pass uninterrupted there through.

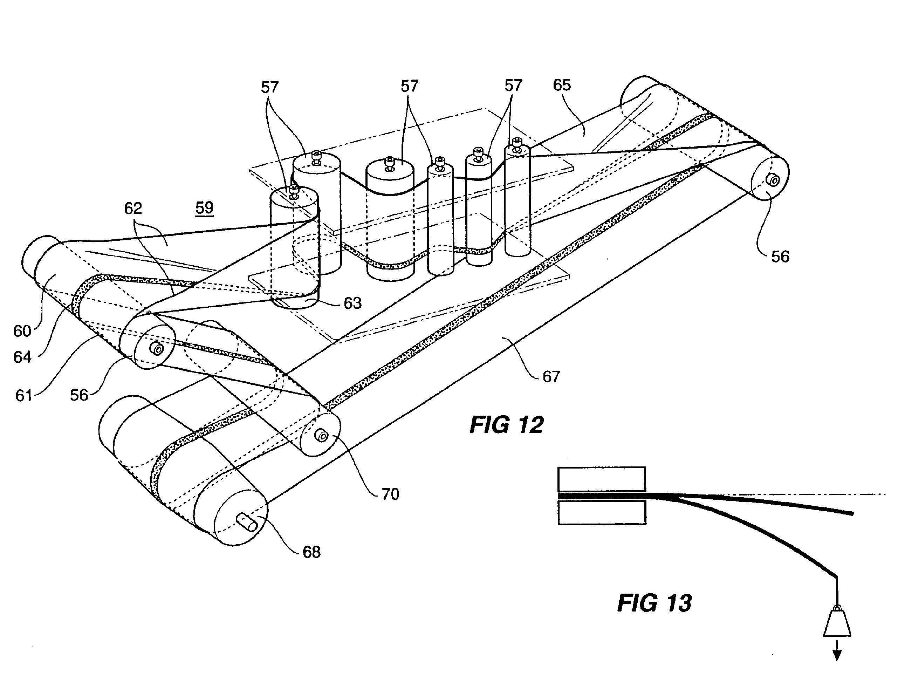

Finally in Figure 13 there is shown a simple cantilever test rig where a piece of a side of the belt of 300 mm width of a type as chosen for the embodiment is subject to a weight at a distance. The distance from the clamp to the end of the belt material is 150 mm, the weight is 100 grams and the deflection as a result of the weight is 46 mm. The fabric is a monofilament polyester 830 grams /squ metre, 24 x 8 threads /cm, 7x1 satin weave.

The middle portion "hinge " fabric has been chosen as a staple spun yarn polypropylene 400 gm/ sq metre, 17 x 10 threads / cm, 2 x 2 twill weave. This has been subjected to the same test as with the side material but is so pliable as to fall to virtually its full length vertically downward under its own weight.

Although not shown, further attachments may be made to the folding belt filter. These include a scraper to remove sludge from the belt when deliquifying is completed; perforated or slotted rollers to improve deliquifying efficiency; and liquid or air sprays to wash accumulated material form the belt as it returns to the feed section of the apparatus so the belt will be reusable which is to say remains permeable.

Thus one can see that the above invention can be achieved with one belt in contrast to existing applications which require two belts. The use of one belt in this invention can reduce the complexity of the device and furthermore by causing the belt to fold upon itself in a relatively upright position minimises side dripping of sludge and leads to a greater efficiency of the deliquifying system.

However in a further embodiment the belt comprises two belts which are arranged to track side by side and there is a filter material which extends across both belts and provides a joining together along a medial lengthwise alignment of the two otherwise separate belts. This can be considered to also be therefore a single belt although the construction is comprised of in the main the two separate laterally stiff belt elements that are joined by a further part which provides a filter characteristic and is pliable to an extent that the folding flat repeatedly requirement without damage can also be accommodated.

## Claims

1. A porous belt filter device (10) for effecting separation of liquid from solids or solids from liquid, including a frame supporting a porous belt (12) held by and between rollers (14, 16, 18) with drive means so as to progress the belt (12) through a collection zone (22) to a compression zone, **characterised in that** the one belt (12) is supported so as to be caused to change its shape as it progresses through the collection zone from an approximately planar shape which is supported so as to provide a substantially horizontal alignment of its uppermost surface when viewed in a lateral direction to one where the belt (12) is folded into a supporting shape to have the previously upper surface on one side of the belt (12) being pushed together with the previously upper surface on an opposite side of the belt (12) so that the respective upper surfaces of the sides (62) are aligned to be approximately vertical at a nipping alignment, the nipping alignment being effected by having the folded belt caused to proceed through a curved path around a plurality of substantially vertical rollers (57) and where the uppermost edges of the respective sides (62) of the belt at the nipping location are at a height that is similar or lower height than the upper surface at a commencement location of the collection zone.

2. A filter device as in claim 1, further **characterised in that** the belt is a single endless belt which is caused subsequent to the nipping location to follow a curved path where the plurality of substantially vertical rollers are arranged so that the folded belt will pass around each substantially vertical rollers are arranged so that there will be effected a change of direction of the pathway of the belt in its folded orientation thereby.

3. A filter device as in claim 2, further **characterised in that** the number and alignment of the said plurality of substantially vertical rollers are such that the belt (12) Will pass through to an equal extent curves in a first sense as compared to the extent of curves in an opposite sense.

4. A filter device as in any of claims 1 to 3, further **characterised in that** the frame further includes guides supporting the belt where this is progressing from the unfolded to the folded position.

5. A filter device as claimed in any preceding claim, wherein the porous belt comprises a middle portion (64) which extends lengthwise along the belt which middle portion is more pliable or flexible than a remained of the belt (60, 61) to facilitate a folding of the belt (58) about this portion, such that the width wise opposite edges of the belt are folded and brought together so that the respective upper surfaces of the sides (62) are aligned to be approximately vertical at a nipping alignment, the nipping alignment being effected by having the folded belt caused to proceed through a curved path around a substantially vertical roller (57) and where the uppermost edges of the respective sides (62) of the belt at the nipping location are at a height that is similar or lower height than the upper surface at a commencement location of the collection zone, the belt being a simple endless belt with no supporting belt.

6. A filter device (10) as claimed in claim 5, wherein the belt (58) comprises two parts (60, 61) which are joined together along a middle area (64) by means allowing for relative movement of its respective sides (60, 61) so that the belt can be caused to change its shape from one part where it is planar with both sides (60, 61) at a common level, to a further part where both sides (60, 61) are folded together.

7. A filter device (10) as claimed in claim 6, wherein the belt (58) comprises a material positioned and orientated and shaped and caused to be changed in shape as said endless belt (58) moves from one position to another position, providing thereby a supporting shape to hold liquid, one part of which shape is defined at one location by a coming together of facing surfaces of said at least one belt, and wherein the belt is capable of being supported so as to be caused to change its shape as it progresses through one position from an approximately planar shape to another position where the belt is folded to have a previously upper surface on one side of the belt (60) being pushed together with the previously upper surface on an opposite side of the belt (61).

8. A filter device (10) as claimed in claim 7 wherein:
the flexible or pliable section (64) of the belt (58) is located along the longitudinal centre line of the belt (58) when the said belt (58) is caused to change its shape as it progresses from an approximately planar shape so as to provide a substantially horizontal alignment of its uppermost surface when viewed in a lateral direction to one where the belt (58) is folded to have the previously upper surface on one side of the belt (58) being pushed together with the previously upper surface on an opposite side of the belt (58), the belt (58) will fold along the said more flexible or pliable longitudinal section so that the respective upper surfaces of the sides are aligned to be approximately vertical at a nipping alignment.

9. A filter device (10) as claimed in claim 7 or claim 8, wherein the belt (58) changes its shape as it progresses from said one position to said other position from an approximately planar shape in which the belt has a substantially horizontal alignment of its uppermost surface when viewed in a lateral direction to one where the belt (58) is folded to have the previously upper surface on one side of the belt (58) being pushed together with the previously upper surface on an opposite side of the belt (58), so that the respective upper surfaces of the sides are aligned to be approximately vertical at a nipping location and are at a height that is a similar or lower height than the upper surface at a commencement location of the other position.

10. A filter device (10) as claimed in any of claims 5 to 9, wherein the belt (58) is a filter belt.

11. A filter device (10) as claimed in any of claims 5 to 10, wherein the middle portion (64) comprises hinge means to cooperate with the respective surfaces of each respective side (60, 61) of the belt for bringing the respective surfaces together to effect a nipping pressure one against the other to thereby apply pressure to material as it is progressively caught therebetween.

## Patentansprüche

1. Filtervorrichtung mit porösem Band (10) zum Bewirken der Trennung von Flüssigkeit von Feststoffen oder Feststoffen von Flüssigkeit mit einem Rahmen, der ein poröses Band (12) trägt, das von und zwischen Rollen (14, 16, 18) mit Antriebsmitteln gehalten wird, um das Band (12) durch eine Sammelzone (22) zu einer Kompressionszone voranzubewegen, **dadurch gekennzeichnet, dass** das eine Band (12) so getragen wird, dass es veranlasst wird, seine Form zu ändern, während es sich durch die Sammelzone voranbewegt, und zwar von einer ungefähr ebenen Form, die derart getragen wird, dass für eine, bei Betrachtung in seitlicher Richtung, im Wesentlichen horizontale Ausrichtung seiner oben liegenden Oberfläche gesorgt wird, zu einer, in der das Band (12) zu einer tragenden Form gefaltet ist, in der die zuvor oben liegende Oberfläche auf einer Seite des Bands (12) mit der zuvor oben liegenden Oberfläche des Bands (12) auf einer gegenüberliegenden Seite des Bands (12) zusammengedrückt wird, so dass die jeweiligen oben liegenden Oberflächen der Seiten (62) so ausgerichtet sind, dass sie in einer Quetschausrichtung ungefähr vertikal sind, wobei die Quetschausrichtung bewirkt wird, indem das gefaltete Band veranlasst wird, sich entlang einem gekrümmten Pfad um eine Vielzahl im Wesentlichen vertikaler Rollen (57) voranzubewegen und wobei sich die oben liegenden Ränder der jeweiligen Seiten (62) des Bands an der Quetschstelle in einer Höhe befinden, die ähnlich oder niedriger ist als die Höhe der oben liegenden Oberfläche an einem Anfangsort der Sammelzone.

2. Filtervorrichtung nach Anspruch 1, weiter **dadurch gekennzeichnet, dass** das Band ein einziges endloses Band ist, das dazu veranlasst wird, anschließend an die Quetschstelle, einem gekrümmten Pfad zu folgen, in dem die Vielzahl im Wesentlichen vertikaler Rollen so angeordnet sind, dass sich das gefaltete Band um jede im Wesentlichen vertikale Rolle bewegt und dass **dadurch** eine Änderung der Richtung des Pfads des Bands in seiner gefalteten Orientierung bewirkt wird.

3. Filtervorrichtung nach Anspruch 2, weiter **dadurch gekennzeichnet, dass** Zahl und Ausrichtung der im Wesentlichen vertikalen Rollen derart sind, dass das Band (12) im gleichen Ausmaß Krümmungen in einer ersten Richtung durchläuft wie Krümmungen in einer entgegengesetzten Richtung.

4. Filtervorrichtung nach einem der Ansprüche 1 bis 3, weiter **dadurch gekennzeichnet, dass** der Rahmen weiter Führungen umfasst, die das Band dort tragen, wo es sich aus der ungefalteten in die gefaltete Position voranbewegt.

5. Filtervorrichtung nach einem der vorangehenden Ansprüche, wobei das poröse Band einen mittleren Abschnitt (64) umfasst, der sich in Längenrichtung entlang dem Band erstreckt, wobei der mittlere Abschnitt biegsamer oder flexibler ist als ein Rest des Bands (60,61), um ein Falten des Bands (58) um diesen Abschnitt zu erleichtern, so dass die in Breitenrichtung einander gegenüberliegenden Ränder des Bands gefaltet und zusammengeführt werden, so dass die jeweiligen oben liegenden Oberflächen der Seiten (62) so ausgerichtet sind, dass sie in einer Quetschausrichtung ungefähr vertikal sind, wobei die Quetschausrichtung bewirkt wird, indem das gefaltete Band veranlasst wird, sich durch einen gekrümmten Pfad um eine im Wesentlichen vertikale Rolle (57) voranzubewegen und wobei die oben liegenden Ränder der jeweiligen Seiten (62) des Bands an der Quetschstelle auf einer Höhe liegen, die ähnlich oder niedriger ist als die Höhe der oben liegenden Oberfläche an einem Anfangsort der Sammelzone, wobei das Band ein einfaches endloses Band ohne Trägerband ist.

6. Filtervorrichtung (10) nach Anspruch 5, wobei das Band (58) zwei Teile (60, 61) umfasst, die entlang einem mittleren Bereich (64) mit einem Mittel miteinander verbunden sind, das die relative Bewegung seiner jeweiligen Seiten (60, 61) zulässt, so dass das Band veranlasst werden kann, seine Form zu ändern und zwar von einem Teil, in dem es eben ist und beide Seiten (60, 61) auf einer gemeinsamen Ebene liegen, zu einem weiteren Teil, in dem die beiden Seiten (60, 61) zusammengefaltet sind.

7. Filtervorrichtung (10) nach Anspruch 6, wobei das Band (58) ein Material umfasst, das positioniert und orientiert und geformt und veranlasst wird, seine Form zu ändern, während sich das endlose Band (58) von einer Position zu einer anderen Position bewegt, um **dadurch** eine tragende Form zum Halten von Flüssigkeit bereitzustellen, wobei ein Teil dieser Form an einer Stelle durch Zusammenkommen gegenüberliegender Oberflächen des mindestens einen Bands definiert wird und wobei das Band so getragen werden kann, dass es veranlasst wird, seine Form zu ändern, und zwar von einer ungefähr ebenen Form während es sich durch eine Position bewegt zu einer anderen Position, in der das Band gefaltet ist, so dass eine zuvor oben liegende Oberfläche auf einer Seite des Bands (60) mit der zuvor oben liegenden Oberfläche auf einer gegenüberliegenden Seite des Bands (61) zusammengedrückt wird.

8. Filtervorrichtung (10) nach Anspruch 7, wobei:
sich der flexible oder biegsame Abschnitt (64) des Bands (58) entlang der längs verlaufenden Mittellinie des Bands (58) befindet, wenn das Band (58) veranlasst wird, seine Form zu ändern, wenn es sich aus einer ungefähr ebenen Form, um eine, bei Betrachtung in einer seitlichen Richtung, im Wesentlichen horizontale Ausrichtung seiner Oberseite bereitzustellen, in eine Form voranbewegt, in der das Band (58) gefaltet ist, so dass die zuvor oben liegende Oberfläche auf einer Seite des Bands (58) mit der zuvor oben liegenden Oberfläche auf einer gegenüberliegenden Seite des Bands (58) zusammengedrückt wird, wobei sich das Band (58) entlang dem flexibleren oder biegsameren Längsabschnitt faltet, so dass die jeweiligen oben liegenden Oberflächen der Seiten so ausgerichtet sind, dass sie in einer Quetschausrichtung ungefähr vertikal sind.

9. Filtervorrichtung (10) nach Anspruch 7 oder Anspruch 8, wobei das Band (58) seine Form ändert, während es sich von der einen Position zu der anderen Position voranbewegt, und zwar von einer im Wesentlichen ebenen Form, in der das Band, bei Betrachtung in einer seitlichen Richtung, eine im Wesentlichen horizontale Ausrichtung seiner oben liegenden Oberfläche hat, zu einer, in der das Band (58) gefaltet ist, so dass die zuvor oben liegende Oberfläche auf einer Seite des Bands (58) mit der zuvor oben liegenden Oberfläche auf einer gegenüberliegenden Seite des Bands zusammengedrückt wird, so dass die jeweiligen oben liegenden Oberflächen der Seiten so ausgerichtet sind, dass sie an einer Quetschstelle ungefähr vertikal sind und sich auf einer Höhe befinden die ähnlich oder kleiner ist als die Höhe der oben liegenden Oberfläche an einem Anfangsort der anderen Position.

10. Filtervorrichtung (10) nach einem der Ansprüche 5 bis 9, wobei es sich bei dem Band (58) um ein Filterband handelt.

11. Filtervorrichtung (10) nach einem der Ansprüche 5 bis 10, wobei der mittlere Abschnitt (64) Gelenkmittel umfasst, um mit den jeweiligen Oberflächen jeder jeweiligen Seite (60, 61) des Bands zusammenzuwirken, um die jeweiligen Oberflächen zusammenzuführen, um einen Quetschdruck der einen gegen die andere zu bewirken, um **dadurch** Druck auf Material auszuüben, wenn es zunehmend zwischen ihnen eingeklemmt ist.

## Revendications

1. Dispositif de filtration à bande poreuse (10) destiné à effectuer la séparation d'un liquide de solides ou de solides d'un liquide, qui inclut un cadre supportant une bande poreuse (12) maintenue par et entre des rouleaux (14, 16, 18) avec un moyen d'entraînement pour faire progresser la bande (12) à travers une zone de collecte (22) jusqu'à une zone de compression, **caractérisé en ce que** ladite bande (12) est soutenue pour l'amener à changer de forme alors qu'elle progresse à travers la zone de collecte en passant d'une forme approximativement plane qui est soutenue pour produire un alignement sensiblement horizontal de sa face supérieure lorsqu'on la regarde dans une direction latérale à une forme où la bande (12) est pliée en une forme support afin de pousser la face précédemment supérieure sur un côté de la bande (12) contre la face précédemment supérieure sur un côté opposé de la bande (12) de façon à ce que les faces supérieures respectives des côtés (62) soient alignées pour être approximativement verticales dans un alignement par pincement, l'alignement par pincement étant effectué en amenant la bande pliée à avancer suivant une trajectoire courbe autour d'une pluralité de rouleaux sensiblement verticaux (57) et où les arêtes supérieures des côtés respectifs (62) de la bande à l'endroit du pincement se trouvent à une altitude qui est similaire à ou à une altitude plus basse que la face supérieure à un endroit où commence la zone de collecte.

2. Dispositif de filtration selon la revendication 1, **caractérisé en outre en ce que** la bande est une bande sans fin unique qui est amenée après l'endroit du pincement à suivre une trajectoire courbe où la pluralité de rouleaux sensiblement verticaux est disposée de sorte que la bande pliée passe autour de chaque rouleau sensiblement vertical et de façon à ce qu'il s'opère un changement de direction de la trajectoire de la bande dans son orientation pliée de cette façon.

3. Dispositif de filtration selon la revendication 2, **caractérisé en outre en ce que** le nombre et l'alignement de ladite pluralité de rouleaux sensiblement verticaux sont tels que la bande (12) traverse des courbures dans un premier sens d'une mesure égale à des courbures dans un sens opposé.

4. Dispositif de filtration selon l'une quelconque des revendications 1 à 3, **caractérisé en outre en ce que** le cadre inclut en outre des guides qui soutiennent la bande lorsque celle-ci progresse de la position non pliée à la position pliée.

5. Dispositif de filtration selon l'une quelconque des revendications précédentes, dans lequel la bande poreuse comprend une partie médiane (64) qui s'étend dans le sens de la longueur le long de la bande, laquelle partie médiane est plus souple ou plus flexible que le reste de la bande (60, 61) pour faciliter un pliage de la bande (58) autour de cette partie, de sorte que les arêtes opposées dans le sens de la largeur de la bande se plient et soient réunies de façon à ce que les faces supérieures respectives des côtés (62) soient alignées pour être approximativement verticales dans un alignement par pincement, l'alignement par pincement étant effectué en amenant la bande pliée à avancer suivant une trajectoire courbe autour d'un rouleau sensiblement vertical (57) et où les arêtes supérieures des côtés respectifs (62) de la bande à l'endroit du pincement se trouvent à une altitude qui est similaire à ou à une altitude plus basse que la surface supérieure à un endroit où commence la zone de collecte, la bande étant une bande sans fin unique sans bande support.

6. Dispositif de filtration (10) selon la revendication 5, dans lequel la bande (58) comprend deux parties (60, 61) qui sont jointes ensemble le long d'une zone médiane (64) par un moyen permettant un mouvement relatif de ses côtés respectifs (60, 61) de sorte que la bande puisse être amenée à changer de forme en passant d'une partie où elle est plane avec les deux côtés (60, 61) à un niveau commun, à une partie supplémentaire où les deux côtés (60, 61) sont repliés ensemble.

7. Dispositif de filtration (10) selon la revendication 6 dans lequel la bande (58) comprend une matière disposée et orientée et mise en forme et amenée à changer de forme alors que ladite bande sans fin (58) se déplace d'une position à une autre position, fournissant de cette façon une forme support pour contenir le liquide, une partie de laquelle forme étant définie à un endroit par une arrivée simultanée des faces se faisant face de ladite au moins une bande, et dans lequel la bande est susceptible d'être soutenue de sorte à être amenée à changer de forme alors qu'elle progresse à travers une position en partant d'une forme approximativement plane jusqu'à une autre position où la bande est pliée afin de pousser une face précédemment supérieure sur un côté de la bande (60) contre la surface précédemment supérieure d'un côté opposé de la bande (61).

8. Dispositif de filtration (10) selon la revendication 7 dans lequel :
la section flexible ou souple (64) de la bande (58) se situe le long de l'axe longitudinal de la bande (58) où ladite bande est amenée à changer de forme alors qu'elle progresse en passant d'une forme approximativement plane de façon à produire un alignement sensiblement horizontal de sa face supérieure lorsqu'on la regarde dans une direction latérale à une forme où la bande (58) est pliée afin de pousser la face précédemment supérieure sur un côté de la bande (58) contre la surface précédemment supérieure sur un côté opposé de la bande (58), la bande (58) se pliera le long de ladite section longitudinale plus flexible ou souple de sorte que les faces supérieures respectives des côtés soient alignées pour être approximativement verticales dans un alignement par pincement.

9. Dispositif de filtration (10) selon la revendication 7 ou la revendication 8, dans lequel la bande (58) change de forme alors qu'elle progresse de ladite position à ladite autre position en passant d'une forme approximativement plane dans laquelle la bande a un alignement sensiblement horizontal de sa face supérieure lorsqu'on la regarde dans une direction latérale à une forme où la bande (58) est pliée afin de pousser la face précédemment supérieure sur un côté de la bande (58) contre la face précédemment supérieure sur un côté opposé de la bande (58) de façon à ce que les faces supérieures respectives des côtés soient alignées pour être approximativement verticales dans un endroit du pincement et se situent à une altitude qui est similaire à ou à une altitude plus basse que la face supérieure à un endroit où commence l'autre position.

10. Dispositif de filtration (10) selon l'une quelconque des revendications 5 à 9, dans lequel la bande (58) est une bande de filtre.

11. Dispositif de filtration (10) selon l'une quelconque des revendications 5 à 10, dans lequel la partie médiane (64) comprend un moyen d'articulation pour collaborer avec les faces respectives de chaque côté respectif (60, 61) de la bande en vue de réunir les faces respectives pour obtenir une pression par pincement de l'une contre l'autre afin d'appliquer de cette façon une pression sur une matière alors que celle-ci est progressivement prise entre ces faces.
